# EUROPEAN PATENT SPECIFICATION

(11) **EP 2 885 514 B1**
(45) Date of publication and mention of the grant of the patent: **30.08.2017**
(21) Application number: 13785213.3
(22) Date of filing: 02.05.2013
(51) Int. Cl.: F01N 3/20, F01N 9/00, B01D 53/94

(54) **EXHAUST AFTERTREATMENT SYSTEM AND METHOD PERTAINING TO SUCH A SYSTEM**
ABGASNACHBEHANDLUNGSSYSTEM UND VERFAHREN FÜR SOLCH EIN SYSTEM
SYSTÈME DE POST-TRAITEMENT D'ÉCHAPPEMENT ET PROCÉDÉ SE RATTACHANT À UN TEL SYSTÈME

(30) Priority: 03.05.2012 SE 1250439
(43) Date of publication of application: 24.06.2015
(73) Proprietor: Scania CV AB, 151 87 Södertälje (SE)
(72) Inventor: STENLÅÅS, Ola, S-151 48 Södertälje (SE)
(74) Representative: Scania CV AB
(86) International application number: PCT/SE2013/050482
(87) International publication number: WO 2013/165309

(56) References cited:
- EP-A1- 2 143 901
- EP-A1- 2 143 901
- WO-A1-2012/021103
- DE-A1-102009 042 087
- DE-A1-102010 055 642

## Description

### Technical field of the invention

The present invention concerns an exhaust gas aftertreatment system and a method in connection with such a system, according to the preambles of the independent claims. The method and the system are adapted in particular so as to reduce the emissions of nitrous oxide, N₂O.

### Background of the invention

A combustion engine burns an air and fuel mixture in order to generate a driving torque. The combustion process generates exhaust gases that are released from the engine into the atmosphere. The exhaust gases contain, among other things, nitrous oxides (NOx), carbon dioxide (CO₂), carbon monoxide (CO) and particles. NOx is a collective term used to describe the exhaust gases that consist primary of nitrous oxide (NO) and nitrogen dioxide (NO₂). An exhaust gas aftertreatment system processes the exhaust emissions in order to reduce the emissions before they are released into the atmosphere. In one exemplary exhaust gas aftertreatment system, a dosing system injects a reducing agent into the exhaust gases upstream of a selective catalytic reduction catalytic converter (SCR catalytic converter). The exhaust gas and reducing agent mixture react in the SCR catalytic converter, thereby reducing the amounts of NOx that are released into the atmosphere.

One example of a reducing agent is liquid urea, which is commercially available as AdBlue®. This fluid is a non-toxic aqueous urea solution that is used to chemically reduce emissions of nitrous oxides, particularly in heavy diesel-powered vehicles.

The reducing agent reacts with NOx in the SCR catalytic converter to achieve the NOx reduction. More specifically, the reducing agent is broken down and forms ammonia (NH₃), which in turn reacts with NOx to form water and nitrogen (N₂).

To achieve the described NOx reduction, NH₃ must be stored in the SCR catalytic converter. For the SCR catalytic converter to be able to work efficiently, the stored level must be at an adequate level. In further detail, the NOx reduction, or the conversion efficiency, is dependent upon the stored level. The store of NH₃ must be maintained in order to maintain high conversion efficiency under various operating conditions. However, as the temperature in the SCR catalytic converter rises, the NH₃ level must be reduced accordingly to prevent the release of NH₃ (i.e. a surplus of NH₃ being released from the SCR catalytic converter), which can lower the conversion efficiency of the catalyst.

In summary, to satisfy more stringent environmental requirements, more and more vehicle manufacturers are using SCR catalytic converter systems to cleanse diesel exhaust gases of nitrous oxides (NOx). This is done by injecting ammonia solution into an SCR catalytic converter, which helps to convert NOx particles into nitrogen and water. The exhaust gas purification strategy should take into account that a sufficient amount of NOx must be converted while avoiding injecting too much ammonia, in view of both fuel economy and environmental considerations.

At least one diesel oxidation catalyst (DOC) is also used in exhaust gas aftertreatment systems, and one or a plurality of diesel particle filters (DPF) are also often coated with a catalytic coating. The purpose of this is in part to generate a sufficient amount of NO₂ to achieve passive oxidation of soot that is captured by a DPF. This occurs according to the reaction: C + 2NO₂ → CO₂ + 2NO

In those cases where not all the ammonia has been consumed for the desired reduction in the SCR catalytic converter, it can be stored in the SCR catalytic converter, entrained in the exhaust gases from the SCR catalytic converter or reacted in the SCR catalytic converter to form N₂O. To avoid undesirable ammonia emissions, a so-called Ammonia Slip Catalyst, hereinafter ASC catalyst, is used downstream of the SCR catalytic converter to process any residual ammonia.
The function of the ASC catalyst depends in part on the temperature of the exhaust gases in such a way that if ammonia is oxidized in the ASC catalyst under conditions where the temperature in the ASC is high and the mixture is favorable, mainly NOx will be produced. On the other hand, if ammonia is oxidized under conditions where the conditions in the ASC are less favorable, N₂O (nitrous oxide) will be produced instead.

The ability of the SCR catalytic converter to store ammonia decreases with increasing temperature, with the result that ammonia will then preferably either leave the SCR catalytic converter or transition into N₂O. As a result, an ASC catalyst normally acquires high levels of ammonia only at high temperatures. N₂O emissions will thus depend on the temperature in both the SCR catalytic converter and the ASC catalyst. In the case where conditions are less favorable, the amount of ammonia and NO_{X} will decrease downstream of the ASC catalyst, while N₂O will be released. Because N₂O is a gas that is a very powerful greenhouse gas, ca. 300 times stronger than carbon dioxide, it is desirable to reduce the emissions of N₂O into the atmosphere.

Published patent application EP-2143901 describes a method intended to estimate the amount of N₂O produced in vehicle exhaust gases. This is achieved in part by sensing the NOx concentrations upstream and downstream of the SCR catalytic converter. By then regulating the quantity of urea supplied based on these estimates, it is possible to thereby reduce the formation of nitrous oxide in the exhaust gas purification process.

US-5270025 concerns a method for reducing nitrous oxide emissions while simultaneously reducing NOx. A combination of urea and an additional substance, such as glutamate, is used to regulate the emissions.

US-5547650 describes an exhaust gas purification system in which N2O is removed by heating the exhaust gases and, finally, US-2009/0324453 describes a catalyst for NOx purification of exhaust gases by means of urea dosing.

A need thus exists to reduce emissions of nitrous oxide, and the object of the present invention is to achieve an improved exhaust gas aftertreatment system in which the emissions of N₂O are reduced or avoided entirely.

### Summary of the invention

The aforesaid object is achieved by the invention defined in the independent claims.

Preferred embodiments are defined in the dependent claims.

The invention generally concerns a method for reducing nitrous oxide emissions, and more specifically a method for an exhaust gas aftertreatment system adapted so as to reduce the amount of N₂O that is produced in a selective catalytic reduction catalytic converter (SCR catalytic converter) and/or in an ammonia slip catalyst (ASC catalyst) disposed in the exhaust gas flow from a combustion engine, wherein the exhaust gas aftertreatment system comprises an SCR catalytic converter disposed upstream of an optional ASC catalyst, whereupon a reducing agent is adapted so as to be added to the exhaust gas flow upstream of the SCR catalytic converter at a dosing frequency F. According to the method, the dosing frequency F is adjusted so as to minimize the amount of N₂O that is produced in the SCR catalytic converter and/or ASC catalyst while maintaining the amount of reducing agent added. According to the method, the dosing frequency is adjusted so that it is increased when an exhaust gas flow temperature upstream of the SCR and/or ASC catalyst is higher than a predetermined threshold value.

For example, the increase in the dosing frequency entails a doubling of the frequency compared with when the temperature is below said threshold value.

The invention also comprises an exhaust gas aftertreatment system in which the aforesaid method is implemented.

The reducing agent is added pulse-wise, with current dosing frequencies normally falling within the range of 0.1 - 10 Hz.

The invention is based on the inventor's insight that, by adding the reducing agent at a higher frequency compared with that currently used, the variations of the reducing agent in the exhausts gases that react in and emerge from the SCR catalytic converter are reduced, which is advantageous in terms of reducing the amount of N₂O that is produced in the SCR catalytic converter or in the subsequent ASC catalyst.
According to the invention, the dosing frequency must be equal to or higher than 2 Hz, while maintaining the total dosed amount of reducing agent, compared with a conventionally set dosing frequency.

By controlling the dosing of the reducing agent, it is possible in some cases to regulate the formation of nitrous oxide and thereby reduce it. Existing hardware for supplying reducing agent can be used without necessitating changes in the SCR catalytic converter /ASC catalyst, which is advantageous, as the costs of implementing the invention in existing systems will be low.

### Brief description of drawing

Figure 1 is a block diagram that schematically illustrates one embodiment of the present invention.
Figure 2 shows graphs intended to illustrate the present invention.
Figure 3 is a flow diagram that illustrates the method according to one embodiment of the present invention.

### Detailed description of preferred embodiments of the invention

The invention will now be described in detail with reference to the accompanying figures.

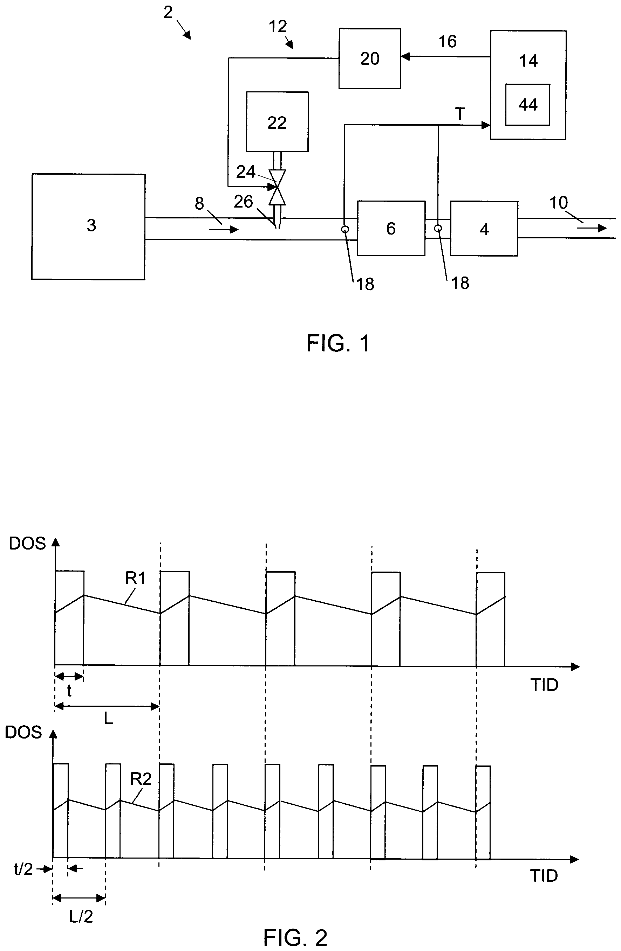

Figure 1 shows a block diagram that illustrates one embodiment of the invention.
The invention concerns an exhaust gas aftertreatment system 2 adapted so as to minimize the amount of N₂O that is produced in a selective catalytic reduction catalytic converter (SCR catalytic converter) 6 and/or in an ammonia slip catalyst (ASC catalyst) 4 disposed in the exhaust gas flow from a combustion engine 3. The ASC catalyst is intended to oxidize ammonia in the exhaust gas flow in order to thereby reduce the release of ammonia.

The exhaust gas aftertreatment system comprises an SCR catalytic converter 6 arranged in an exhaust gas line 8 upstream of an optional ASC catalyst 4, and the exhaust gases from the combustion engine 3 thus pass through the SCR catalytic converter 6 and any ASC catalyst 4 before being released into the surrounding via the exhaust gas outlet 10. The exhaust gas aftertreatment system further comprises an injection device 12 adapted so as to inject a reducing agent into the exhaust gases in the exhaust gas line 8 upstream of the SCR catalytic converter 6 at a dosing frequency F.

The reducing agent, e.g. urea, is thus injected by means of an injection device 12 into the exhaust gases in the exhaust gas line 8 upstream of the SCR catalytic converter 6. The injection device 12 comprises one or a plurality of injection elements 26 in the form of injection nozzles or the like that are arranged in the exhaust gas line 8, and a storage container 22 for reducing agent connected thereto. The injection device 12 also comprises a control element 20 connected to a regulating element 24. The regulating element 24 is controlled by the control element 20, which determines how large an amount of reducing agent is to be injected into the exhaust gases based on the prevailing operating conditions of the combustion engine 3 and the catalytic converter 6, and in dependence upon a control signal 16 from a control unit 14.
The reducing agent can, for example, be urea (CO(NH₂)₂), ammonia (NH₃) or a hydrocarbon (fuel). The reducing agent is added by the injection device 12 by injecting the reducing agent at a dosing frequency F, with a dosing period time L (L=1/F), which is defined as the time between the starts of two consecutive injections, with the injection occurring during an adjustable dosing time t of said dosing period time, where 0 < t < L. The amount of reducing agent injected is varied by varying the dosing frequency F and/or the dosing time t for the injection of the reducing agent.
It is further possible to vary the amount of reducing agent added by changing the dosing pressure, i.e. the pressure being applied to the reducing agent during injection. This can occur in combination with a variation of the dosing frequency F and/or the dosing time t.

According to the invention, the exhaust gas aftertreatment system 2 comprises a control unit 14 adapted so as to generate a control signal 16 intended to adjust the dosing frequency F so that the amount of N₂O that is produced in the SCR catalytic converter and/or in the ASC catalyst is minimized while maintaining the amount of reducing agent added.

According to one embodiment, the dosing frequency F is adjusted so that the variation in the amount/content of reducing agent upstream of the SCR catalytic converter is lower than a predetermined threshold value ΔR, where ΔR is +/- 5%.
For example, the dosing frequency F is adjusted so that the variation in the amount/content of reducing agent upstream of the SCR catalytic converter is lower than a predetermined threshold value ΔR, where ΔR is +/- 1%.
According to an additional embodiment, the dosing frequency F is adjusted so that the variation in the amount/content of reducing agent upstream of the ASC catalyst is lower than a predetermined threshold value ΔR, where ΔR is +/- 5%.

The variation in the amount/content of reducing agent can, for example, be modeled by means of folder(s)/table(s) or a suitable formula, based on one or a plurality of the:
- dosing frequency;
- total injected reducing agent flow;
- share of time during which reduction dosing occurs (e.g. expressed as a percentage (%) of the time between two incipient dosings);
- exhaust gas flow (e.g. kg exhaust gas per minute);
- exhaust gas temperature

In certain operating cases and with certain sensor placements, NOx and NH3 sensors can emit signals that oscillate at the same frequency as the dosing, and the amplitude of one or a plurality of such signals can then be incorporated in the model as well, either separately or in combination with one or a plurality of the foregoing parameters.

The variation in the amount/content of reducing agent upstream of the SCR catalytic converter and/or ASC catalyst can thus be determined in one of a plurality of suitable ways. On this basis, the dosing frequency F can be determined/adjusted so that the resulting variation in the amount/content of reducing agent upstream of the SCR catalytic converter and/or ASC catalyst will be lower than a predetermined threshold value ΔR.

The adjustment of the dosing frequency F preferably entails that the dosing frequency F is increased and the dosing time t is reduced. This can, for example, be achieved in that the dosing frequency F is doubled and the dosing time t is halved. This example is illustrated in Figure 2, which shows two graphs, where the upper graph shows a number of pulse-wise dosing of reducing agent with dosing time t, which is thus the time during which the regulating element is open and reducing agent is being injected into the exhaust gas flow. The dosing period time in this case is L, which means that the dosing frequency F = 1/L. The lower graph illustrates an embodiment of the invention in which the dosing frequency F is doubled and the dosing time t is halved. This means that the same amount of reducing agent is released over the same time period.

The content of reducing agent for the two situations has also been specified in both graphs in Figure 2; these contents are designated as R1 and R2.
In the upper graph, in which the dosing frequency is F, injection of a relatively large amount of reducing agent simultaneously entails that not all of it will have time to be consumed in the SCR catalytic converter, but rather a portion will be entrained on with the exhaust gases to the ASC catalyst, where the remaining ammonia will, under certain conditions, be oxidized into NOx while, under different conditions, for example at low exhaust gas flow temperatures, it will instead be released as N₂O.

In the lower graph the dosing frequency F has been doubled and the dosing time halved, i.e. the same amount of reducing agent is released over the same time period. In this case a smaller amount of ammonia will, under certain conditions, be entrained on to the ASC catalyst because a greater share of the reducing agent will have time to be consumed in the SCR catalytic converter, and the release of N₂O will be lower than in the case that is illustrated in the upper graph.

Figure 2 clearly illustrates the advantages of the present invention as a result of the equalization of the reducing agent contents that the curve R2 shows compared to the curve R1. This is evident in that the variations for the curve R2 are less than for the curve R1.

According to one embodiment the dosing frequency is at least 2 Hz.
According to the inventive system, the exhaust gas aftertreatment system comprises a temperature sensor 18 that is adapted so as to measure the temperature in the exhaust gas flow upstream of the SCR catalytic converter 6 and/or ASC catalyst 4. The read temperature T is transmitted to the control unit 14. In the control unit 14 the read temperature is compared to a predetermined threshold value T_{TH}, and if the read temperature T is higher than T_{TH}, the dosing frequency is adjusted so that it is increased. The increase in the dosing frequency can, for example, entail a doubling of the frequency compared with when the temperature was below said threshold value T_{TH}.
The predetermined threshold value T_{TH} lies, for example, in the range of 300-450°C.

One alternative to arranging a temperature sensor as described above is to instead measure a temperature related to the temperature in the exhaust gas flow and calculate the temperature of the exhaust gas flow based on known relationships between the measured temperature and the temperature in the exhaust gas flow. According to an additional alternative, a calculation model is instead used to determine the temperature in the exhaust gas flow, where the model utilizes a number of other known parameters in order to determine the temperature. The temperature T that is measured, or determined according to the alternatives specified above, is transmitted to the control unit 14, wherein the comparison described above is performed.

According to another embodiment, the dosing frequency F is instead adjusted continuously in dependence upon the temperature of the exhaust gas flow upstream of the SCR catalytic converter and/or ASC catalyst in such a way that an increased temperature results in an increased frequency. Correlated values for temperature and dosing frequency, and naturally other parameters related to the release of the reducing agent, are stored in, for example, a table in the control unit 14.

The present invention also comprises a method for an exhaust gas aftertreatment system adapted so as to reduce the amount of N₂O that is produced in a selective catalytic reduction catalytic converter (SCR catalytic converter) and/or in an ammonia slip catalyst (ASC catalyst) disposed in the exhaust gas flow from a combustion engine, wherein the ASC catalyst is intended to oxidize ammonia in the exhaust gas flow. The exhaust gas aftertreatment system comprises an SCR catalytic converter disposed upstream of an optional ASC catalyst. A reducing agent is adapted so as to be added to the exhaust gas flow upstream of the SCR catalytic converter at a dosing frequency F. The system has been described in greater detail above with reference to Figure 1, and reference is made here to that description.

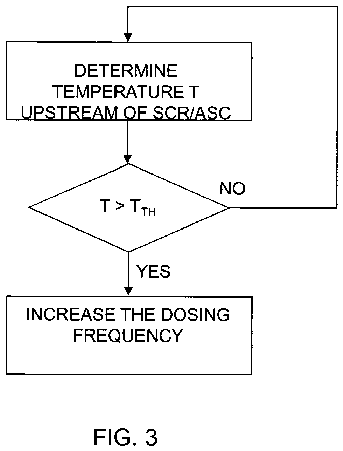

The method comprises adjusting the dosing frequency F so that the amount of N₂O that is produced in the SCR catalytic converter and/or ASC catalyst is minimized while maintaining the amount of reducing agent added. The method further comprises determining the temperature in the exhaust gas flow upstream of the SCR catalytic converter and/or ASC catalyst. The temperature T is transmitted to the control unit. In the control unit the read temperature is compared to a predetermined threshold value T_{TH} and, if the temperature T is higher than T_{TH}, the dosing frequency F is adjusted so that it is increased. This embodiment is illustrated schematically by the flow diagram in Figure 3. Reference is made here to the alternative means of determining the temperature that were discussed above.

According to one embodiment of the method, the dosing frequency is adjusted so that the variation in the amount/content of reducing agent upstream of the SCR catalytic converter and/or ASC catalyst is lower than a predetermined threshold value ΔR, where ΔR is +/-5%.

For example, the dosing frequency F is adjusted so that the variation in the amount/content of reducing agent upstream of the SCR catalytic converter is lower than a predetermined threshold value ΔR, where ΔR is +/- 1%.

According to an additional example, the dosing frequency F is adjusted so that the variation in the amount/content of reducing agent upstream of the ASC catalyst is lower than a predetermined threshold value ΔR, where ΔR is +/- 5%.

The adjustment of the dosing frequency F preferably entails that the dosing frequency F is increased and the dosing time t is reduced. This can be achieved, for example, in that the dosing frequency F is doubled and the dosing time t is halved.

The increase in the dosing frequency F can, for example, entail a doubling of the dosing frequency compared with when the temperature was below said threshold value T_{TH}. The predetermined threshold value T_{TH} lies, for example in the range of 300-450°C.

According to another embodiment, the dosing frequency F is instead adjusted continuously in dependence upon the exhaust gas flow temperature upstream of the SCR catalytic converter and/or ASC catalyst in such a way that an increased temperature results in an increased dosing frequency. Correlated values for temperature and dosing frequency and, naturally, other parameters related to the release of the reducing agent are stored, for example, in a table in the control unit 14.

The present invention is not limited to the preferred embodiments described above. Various alternatives, modifications and equivalents can be used. The foregoing embodiments are consequently not to be to viewed as limiting the protective scope of the invention, which is defined in the accompanying claims.

## Claims

1. A method for an exhaust gas aftertreatment system (2) adapted so as to reduce the amount of N₂O that is produced in a selective catalytic reduction catalytic converter (SCR catalytic converter) (6) and/or in an ammonia slip catalyst (ASC catalyst) (4) disposed in the exhaust gas flow from a combustion engine (3), wherein the exhaust gas aftertreatment system (2) comprises an SCR catalytic converter (6) disposed upstream of an ASC catalyst (4), and wherein a reducing agent is adapted so as to be added to the exhaust gas flow upstream of the SCR catalytic converter (6) at a dosing frequency (F), **characterized in that** the method comprises adjusting the dosing frequency (F) so that the amount of N₂O that is produced in the SCR (6) and/or ASC (4) catalyst is minimized while maintaining the amount of reducing agent added, wherein the dosing frequency (F) is adjusted so that it is increased when the exhaust gas flow temperature (T) upstream of the SCR (6) and/or ASC (4) catalyst is higher than a predetermined threshold value (T_{TH}).

2. The method according to claim 1, wherein the dosing frequency (F) is adjusted so that the variation in the amount of reducing agent upstream of the SCR catalytic converter (6) is lower than a predetermined threshold value ΔR, where ΔR is +/-5%.

3. The method according to any of claims 1 or 2, wherein the dosing frequency (F) is adjusted so that the variation in the amount of reducing agent upstream of the SCR catalytic converter (6) is lower than a predetermined threshold value ΔR, where ΔR is +/-1%.

4. The method according to any of claims 1-3, wherein the dosing frequency is adjusted so that the variation in the amount of reducing agent upstream of the ASC catalyst is lower than a predetermined threshold value ΔR, where ΔR is +/- 5%.

5. The method according to any of claims 1-4, wherein the method comprises the adjustment of the dosing frequency (F) entailing that the dosing frequency (F) is increased and a dosing time (t) is reduced.

6. The method according to claim 5, wherein the increase in the dosing frequency (F) entails a doubling of the dosing frequency (F) and a halving of the dosing time (t).

7. The method according to any of claims 1-6, wherein the increase in the dosing frequency (F) entails a doubling of the dosing frequency (F) compared with when the temperature (T) was below said threshold value (T_{TH}).

8. The method according to any of claims 1-7, wherein said predetermined threshold value (T_{TH}) lies in the range of 300-450°C.

9. The method according to any of claims 1-8, wherein the frequency (F) is adjusted continuously in dependence upon the exhaust gas flow temperature (T) upstream of the SCR catalytic converter (6) and/or ASC catalyst (4) in such a way that an increased temperature (T) results in an increased dosing frequency (F).

10. The method according to any of claims 1-9, wherein the dosing frequency (F) is equal to or higher than 2 Hz.

11. An exhaust gas aftertreatment system (2) adapted so as to reduce the amount of N₂O that is produced in a selective catalytic reduction catalytic converter (SCR catalytic converter) (6) and/or in an ammonia slip catalyst (ASC catalyst) (4) disposed in the exhaust gas flow from a combustion engine (3), wherein the exhaust gas aftertreatment system (2) comprises an SCR catalytic converter (6) arranged in an exhaust gas line (8) upstream of an ASC catalyst (4) and the exhaust gases from the combustion engine (3) pass through the SCR catalytic converter (6) and ASC catalyst (4) before they are released into the surroundings via the exhaust gas outlet (10), wherein the exhaust gas aftertreatment system (2) further comprises an injection device (12) arranged so as to inject a reducing agent into the exhaust gas lines in the exhaust gas line (8) upstream of the SCR catalytic converter (6) at a dosing frequency (F), **characterized in that** the exhaust gas aftertreatment system comprises a control unit (14) adapted so as to generate a control signal (16) intended to adjust the dosing frequency (F) so that the amount of N₂O that is produced in the SCR catalytic converter (6) and/or ASC catalyst (4) is minimized while maintaining the amount of reducing agent added, wherein the system (2) comprises a temperature sensor (18) adapted so as to measure the temperature (T) in the exhaust gas flow upstream of the SCR catalytic converter (6) and/or ASC catalyst (4), and wherein the dosing frequency (F) is adjusted so that it is increased when the exhaust gas flow temperature (T) upstream of the SCR and/or ASC catalyst is higher than a predetermined threshold value (T_{TH}).

12. The exhaust gas aftertreatment system according to claim 11, wherein the dosing frequency (F) is adjusted so that the variation in the amount of reducing agent upstream of the SCR catalytic converter (6) is lower than a predetermined threshold value ΔR, where ΔR is +/- 5%.

13. The exhaust gas aftertreatment system according to any of claims 11 or 12, wherein the dosing frequency (F) is adjusted so that the variation in the amount of reducing agent upstream of the SCR catalytic converter (6) is lower than a predetermined threshold value ΔR, wherein ΔR is +/- 1%.

14. The exhaust gas aftertreatment system according to any of claims 11-13, wherein the dosing frequency (F) is adjusted so that the variation in the amount of reducing agent upstream of the ASC catalyst (4) is lower than a predetermined threshold value ΔR, where ΔR is +/- 5%.

15. The exhaust gas aftertreatment system according to any of claims 11-14, wherein the adjustment of the dosing frequency (F) entails that the dosing frequency (F) is increased, and that a dosing time (t) is reduced.

16. The exhaust gas aftertreatment system according to claim 15, wherein the increase in the dosing frequency (F) entails a doubling of the dosing frequency (F) and a halving of the dosing time (t).

17. The exhaust gas aftertreatment system according to any of claims 11-16, wherein the increase in the dosing frequency (F) entails a doubling of the dosing frequency (F) compared with when the temperature (T) was below said threshold value (T_{TH}).

18. The exhaust gas aftertreatment system according to any of claims 11-17, wherein said predetermined threshold value (T_{TH}) lies in the range of 300-450°C.

19. The exhaust gas aftertreatment system according to any of claims 11-18, wherein the frequency (F) is adjusted continuously in dependence upon the exhaust gas flow temperature (T) upstream of the SCR catalytic converter (6) and/or ASC catalyst (4) in such a way that an increased temperature (T) results in an increased dosing frequency (F).

20. The exhaust gas aftertreatment system according to any of claims 11-19, wherein the dosing frequency (F) is equal to or higher than 2 Hz.

## Patentansprüche

1. Verfahren für ein Abgasnachbehandlungssystem (2), das zur Verringerung der N₂O-Menge eingerichtet ist, die in einem selektiven katalytischen Reduktionskatalysator (SCR-Katalysator) (6) und/oder in einem Sperrkatalysator (ASC-Katalysator) (4) erzeugt wird, die/der im Abgasstrom von einem Verbrennungsmotor (3) angeordnet sind/ist, wobei das Abgasnachbehandlungssystem (2) einen SCR-Katalysator (6) aufweist, der stromaufwärts eines ASC-Katalysators (4) angeordnet ist, und wobei ein Reduktionsmittel in den Abgasstrom stromaufwärts des SCR-Katalysators (6) mit einer Dosierfrequenz (F) zugegeben wird,
**dadurch gekennzeichnet, dass** das Verfahren die Dosierfrequenz (F) so anpasst, dass die im SCR- (6) und/oder ASC-Katalysator (4) erzeugte N₂O-Menge minimiert wird, während die Menge des zugegebenen Reduktionsmittels konstant gehalten wird, und die Dosierfrequenz (F) so angepasst wird, dass sie erhöht wird, wenn die Temperatur des Abgasstroms (T) stromaufwärts des SCR- (6) und/oder des ASC-Katalysators (4) höher ist als ein vorgegebener Schwellenwert (T_{TH}).

2. Verfahren nach Anspruch 1, wobei die Dosierfrequenz (F) so angepasst wird, dass die Abweichung der Menge des Reduktionsmittels stromaufwärts des SCR-Katalysators (6) kleiner ist als ein vorgegebener Schwellenwert ΔR, wobei ΔR gleich ist +/-1% .

3. Verfahren nach einem der Ansprüche 1 oder 2, wobei die Dosierfrequenz (F) so angepasst wird, dass die Abweichung der Menge des Reduktionsmittels stromaufwärts des SCR-Katalysators (6) kleiner ist als ein vorgegebener Schwellenwert ΔR, wobei ΔR gleich ist +/-5%.

4. Verfahren nach einem der Ansprüche 1 bis 3, wobei die Dosierfrequenz so angepasst wird, dass die Abweichung der Menge des Reduktionsmittels stromaufwärts des ASC-Katalysators kleiner ist als ein vorgegebener Schwellenwert ΔR, wobei ΔR gleich ist +/-5%.

5. Verfahren nach einem der Ansprüche 1 bis 4, wobei das Verfahren die Anpassung der Dosierfrequenz (F) aufweist, was umfasst, dass die Dosierfrequenz (F) erhöht und eine Dosierdauer (t) verkürzt wird.

6. Verfahren nach Anspruch 5, wobei die Erhöhung der Dosierfrequenz (F) eine Verdopplung der Dosierfrequenz (F) und eine Halbierung der Dosierdauer (t) bedeutet.

7. Verfahren nach einem der Ansprüche 1 bis 6, wobei die Erhöhung der Dosierfrequenz (F) eine Verdopplung der Dosierfrequenz (F) im Vergleich mit dem Zustand, in dem die Temperatur (T) den Schwellenwert (T_{TH}) unterschritten hat, bedeutet.

8. Verfahren nach einem der Ansprüche 1 bis 7, wobei der vorgegebene Schwellenwert (T_{TH}) im Bereich von 300 bis 450 °C liegt.

9. Verfahren nach einem der Ansprüche 1 bis 8, wobei die Frequenz (F) in Abhängigkeit von der Temperatur (T) des Abgasstroms stromaufwärts des SCR-Katalysators (6) und/oder des ASC-Katalysators (4) kontinuierlich so angepasst wird, dass eine erhöhte Temperatur (T) in einer erhöhten Dosierfrequenz (F) resultiert.

10. Verfahren nach einem der Ansprüche 1 bis 9, wobei die Dosierfrequenz (F) gleich oder höher 2 Hz ist.

11. Abgasnachbehandlungssystem (2), das zur Verringerung der N₂O-Menge eingerichtet ist, die in einem selektiven katalytischen Reduktionskatalysator (SCR-Katalysator) (6) und/oder in einem Sperrkatalysator (ASC-Katalysator) (4) erzeugt wird, die/der im Abgasstrom von einem Verbrennungsmotor (3) angeordnet sind/ist, wobei das Abgasnachbehandlungssystem (2) einen SCR-Katalysator (6) aufweist, der in einer Abgasleitung (8) stromaufwärts eines ASC-Katalysators (4) angeordnet ist, und die Abgase von einem Verbrennungsmotor (3) den SCR-Katalysator (6) und den ASC-Katalysator (4) passieren, bevor sie über einen Abgasauslass (10) in die Umgebung ausgeleitet werden, wobei das Abgasnachbehandlungssystem (2) ferner ein Einspritzgerät (12) aufweist, das so angeordnet ist, dass es ein Reduktionsmittel in den Abgastrom in der Abgasleitung (8) stromaufwärts des SCR-Katalysators (6) mit einer Dosierfrequenz (F) einspritzt,
**dadurch gekennzeichnet, dass** das Abgasnachbehandlungssystem eine Steuereinheit (14) aufweist, die zum Erzeugen eines Steuersignals (16) zum Anpassen der Dosierfrequenz (F) eingerichtet ist, so dass die im SCR-Katalysator (6) und/oder ASC-Katalysator (4) erzeugte N₂O-Menge minimiert wird, während die Menge des zugegebenen Reduktionsmittels konstant gehalten wird, wobei das System (2) einen Temperatursensor (18) aufweist, der zum Messen der Temperatur (T) im Abgasstrom stromaufwärts des SCR-Katalysators (6) und/oder des ASC-Katalysators (4) eingerichtet ist, und wobei die Dosierfrequenz (F) so angepasst wird, dass sie erhöht wird, wenn die Temperatur des Abgasstroms (T) stromaufwärts des SCR- (6) und/oder ASC-Katalysators (4) höher ist als ein vorgegebener Schwellenwert (T_{TH}).

12. Abgasnachbehandlungssystem nach Anspruch 11, wobei die Dosierfrequenz (F) so angepasst wird, dass die Abweichung der Menge des Reduktionsmittels stromaufwärts des SCR-Katalysators (6) kleiner ist als ein vorgegebener Schwellenwert ΔR, wobei ΔR gleich ist +/-5%.

13. Abgasnachbehandlungssystem nach einem der Ansprüche 11 oder 12, wobei die Dosierfrequenz (F) so angepasst wird, dass die Abweichung der Menge des Reduktionsmittels stromaufwärts des SCR-Katalysators (6) kleiner ist als ein vorgegebener Schwellenwert ΔR, wobei ΔR gleich ist +/-1.

14. Abgasnachbehandlungssystem nach einem der Ansprüche 11 bis 13, wobei die Dosierfrequenz (F) so angepasst wird, dass die Abweichung der Menge des Reduktionsmittels stromaufwärts des ASC-Katalysators (4) kleiner ist als ein vorgegebener Schwellenwert ΔR, wobei ΔR gleich ist +/-5%.

15. Abgasnachbehandlungssystem nach einem der Ansprüche 11 bis 14, wobei die Anpassung der Dosierfrequenz (F) umfasst, dass die Dosierfrequenz (F) erhöht und eine Dosierdauer (t) verkürzt wird.

16. Abgasnachbehandlungssystem nach Anspruch 15, wobei die Erhöhung der Dosierfrequenz (F) eine Verdopplung der Dosierfrequenz (F) und eine Halbierung der Dosierdauer (t) bedeutet.

17. Abgasnachbehandlungssystem nach einem der Ansprüche 11 bis 16, wobei die Erhöhung der Dosierfrequenz (F) eine Verdopplung der Dosierfrequenz (F) im Vergleich mit dem Zustand, in dem die Temperatur (T) den Schwellenwert (T_{TH}) unterschritten hat.

18. Abgasnachbehandlungssystem nach einem der Ansprüche 11 bis 17, wobei der vorgegebene Schwellenwert (Tr_{H}) im Bereich von 300 bis 450 °C liegt.

19. Abgasnachbehandlungssystem nach einem der Ansprüche 11 bis 18, wobei die Frequenz (F) in Abhängigkeit von der Temperatur (T) des Abgasstroms stromaufwärts des SCR-Katalysators (6) und/oder des ASC-Katalysators (4) kontinuierlich so angepasst wird, dass eine erhöhte Temperatur (T) in einer erhöhten Dosierfrequenz (F) resultiert.

20. Abgasnachbehandlungssystem nach einem der Ansprüche 11 bis 19, wobei die Dosierfrequenz (F) gleich oder höher 2 Hz ist.

## Revendications

1. Procédé pour un système de post-traitement de gaz d'échappement (2) adapté à réduire la quantité de N₂O qui est produite dans un convertisseur catalytique à réduction catalytique sélective (convertisseur catalytique SCR) (6) et/ou dans un catalyseur à perte d'ammoniac (catalyseur ASC) (4) disposé dans l'écoulement de gaz d'échappement d'un moteur à combustion (3), dans lequel le système de post-traitement de gaz d'échappement (2) comprend un convertisseur catalytique SCR (6) disposé en amont d'un catalyseur ASC (4), et dans lequel un agent réducteur est adapté à être ajouté à l'écoulement de gaz d'échappement en amont du convertisseur catalytique SCR (6) à une fréquence de dosage (F), **caractérisé en ce que** le procédé comprend l'ajustage de la fréquence de dosage (F) de telle sorte que la quantité de N₂O qui est produite dans le catalyseur SCR (6) et/ou ASC (4) est minimisée tout en maintenant la quantité d'agent réducteur ajouté, la fréquence de dosage (F) étant ajustée de telle sorte qu'elle est augmentée lorsque la température d'écoulement de gaz d'échappement (T) en amont du catalyseur SCR (6) et/ou ASC (4) est supérieure à une valeur de seuil prédéterminée (T_{TH}).

2. Procédé selon la revendication 1, dans lequel la fréquence de dosage (F) est ajustée de telle sorte que la variation dans la quantité d'agent réducteur en amont du convertisseur catalytique SCR (6) est inférieure à une valeur de seuil prédéterminée ΔR, ΔR étant de +/- 5%.

3. Procédé selon l'une quelconque des revendications 1 ou 2, dans lequel la fréquence de dosage (F) est ajustée de telle sorte que la variation dans la quantité d'agent réducteur en amont du convertisseur catalytique SCR (6) est inférieure à une valeur de seuil prédéterminée ΔR, ΔR étant de +/- 1 %.

4. Procédé selon l'une quelconque des revendications 1 à 3, dans lequel la fréquence de dosage est ajustée de telle sorte que la variation dans la quantité d'agent réducteur en amont du catalyseur ASC est inférieure à une valeur de seuil prédéterminée ΔR, ΔR étant de +/- 5%.

5. Procédé selon l'une quelconque des revendications 1 à 4, dans lequel le procédé comprend l'ajustement de la fréquence de dosage (F) qui implique une augmentation de la fréquence de dosage (F) et une réduction d'un temps de dosage (t).

6. Procédé selon la revendication 5, dans lequel l'augmentation de la fréquence de dosage (F) implique un doublement de la fréquence de dosage (F) et une réduction de moitié du temps de dosage (t).

7. Procédé selon l'une quelconque des revendications 1 à 6, dans lequel l'augmentation de la fréquence de dosage (F) implique un doublement de la fréquence de dosage (F) par rapport au moment où la température (T) est inférieure à ladite valeur de seuil (T_{TH}).

8. Procédé selon l'une quelconque des revendications 1 à 7, dans lequel ladite valeur de seuil prédéterminée (T_{TH}) se trouve dans la plage s'étendant entre 300°C et 450° C.

9. Procédé selon l'une quelconque des revendications 1 à 8, dans lequel la fréquence (F) est ajustée en continu en fonction de la température d'écoulement de gaz d'échappement (T) en amont du convertisseur catalytique SCR (6) et/ou du catalyseur ASC (4) de telle sorte qu'une température (T) accrue entraîne une augmentation de la fréquence de dosage (F).

10. Procédé selon l'une quelconque des revendications 1 à 9, dans lequel la fréquence de dosage (F) est supérieure ou égale à 2 Hz.

11. Système de post-traitement de gaz d'échappement (2) adapté à réduire la quantité de N₂O qui est produite dans un convertisseur catalytique à réduction catalytique sélective (convertisseur catalytique SCR) (6) et/ou dans un catalyseur à perte d'ammoniac (catalyseur ASC) (4) disposé dans l'écoulement de gaz d'échappement d'un moteur à combustion (3), dans lequel le système de post-traitement de gaz d'échappement (2) comprend un convertisseur catalytique SCR (6) disposé dans une ligne de gaz d'échappement (8) en amont d'un catalyseur ASC (4) et les gaz d'échappement du moteur à combustion (3) traversent le convertisseur catalytique SCR (6) et le catalyseur ASC (4) avant d'être relâchés dans le milieu environnant par l'intermédiaire de la sortie de gaz d'échappement (10), et dans lequel le système de post-traitement de gaz d'échappement (2) comprend en outre un dispositif d'injection (12) disposé de manière à injecter un agent réducteur dans les lignes de gaz d'échappement de la ligne de gaz d'échappement (8) en amont du convertisseur catalytique SCR (6) à une fréquence de dosage (F), **caractérisé en ce que** le système de post-traitement de gaz d'échappement comprend une unité de commande (14) adaptée à générer un signal de commande (16) conçu de façon à ajuster la fréquence de dosage (F) de telle sorte que la quantité de N₂O qui est produite dans le convertisseur catalytique SCR (6) et/ou le catalyseur ASC (4) soit minimisée tout en maintenant la quantité d'agent réducteur ajouté, le système (2) comprenant un capteur de température (18) adapté à mesurer la température (T) dans l'écoulement de gaz d'échappement en amont du convertisseur catalytique SCR (6) et/ou du catalyseur ASC (4), et la fréquence de dosage (F) étant ajustée de telle sorte qu'elle est augmentée lorsque la température d'écoulement de gaz d'échappement (T) en amont du catalyseur SCR et/ou ASC est supérieure à une valeur de seuil prédéterminée (T_{TH}).

12. Système de post-traitement de gaz d'échappement selon la revendication 11, dans lequel la fréquence de dosage (F) est ajustée de telle sorte que la variation dans la quantité d'agent réducteur en amont du convertisseur catalytique SCR (6) est inférieure à une valeur de seuil prédéterminée ΔR, ΔR étant de +/- 5%.

13. Système de post-traitement de gaz d'échappement selon l'une quelconque des revendications 11 ou 12, dans lequel la fréquence de dosage (F) est ajustée de telle sorte que la variation dans la quantité d'agent réducteur en amont du convertisseur catalytique SCR (6) est inférieure à une valeur de seuil prédéterminée ΔR, ΔR étant de +/- 1%.

14. Système de post-traitement de gaz d'échappement selon l'une quelconque des revendications 11 à 13, dans lequel la fréquence de dosage (F) est ajustée de telle sorte que la variation dans la quantité d'agent réducteur en amont du catalyseur ASC (4) est inférieure à une valeur de seuil prédéterminée ΔR, ΔR étant de +/- 5%.

15. Système de post-traitement de gaz d'échappement selon l'une quelconque des revendications 11 à 14, dans lequel l'ajustement de la fréquence de dosage (F) implique une augmentation de la fréquence de dosage (F), et une réduction d'un temps de dosage (t).

16. Système de post-traitement de gaz d'échappement selon la revendication 15, dans lequel l'augmentation de la fréquence de dosage (F) implique un doublement de la fréquence de dosage (F) et une réduction de moitié du temps de dosage (t).

17. Système de post-traitement de gaz d'échappement selon l'une quelconque des revendications 11 à 16, dans lequel l'augmentation de la fréquence de dosage (F) implique un doublement de la fréquence de dosage (F) par rapport au moment où la température (T) est inférieure à ladite valeur de seuil (T_{TH}).

18. Système de post-traitement de gaz d'échappement selon l'une quelconque des revendications 11 à 17, dans lequel ladite valeur de seuil prédéterminée (T_{TH}) se trouve dans la plage s'étendant entre 300°C et 450°C.

19. Système de post-traitement de gaz d'échappement selon l'une quelconque des revendication 11 à 18, dans lequel la fréquence (F) est ajustée en continu en fonction de la température d'écoulement de gaz d'échappement (T) en amont du convertisseur catalytique SCR (6) et/ou du catalyseur ASC (4) de telle sorte qu'une température (T) accrue entraîne une augmentation de fréquence de dosage (F).

20. Système de post-traitement de gaz d'échappement selon l'une quelconque des revendications 11 à 19, dans lequel la fréquence de dosage (F) est supérieure ou égale à 2 Hz.
